# EUROPÄISCHE PATENTANMELDUNG

(11) **EP 4 242 483 A1**
(43) Veröffentlichungstag der Anmeldung: **13.09.2023**
(21) Anmeldenummer: 22160450.7
(22) Anmeldetag: 07.03.2022
(51) Int. Cl.: F16C 25/06, F16C 19/54, F16C 33/66

(54) **EINSTELLBARE LAGERANORDNUNG, INSBESONDERE FÜR WINDKRAFTANLAGEN**

(71) Anmelder: Flender GmbH, 46395 Bocholt (DE)
(72) Erfinder: KÖNIG, Christian, 46395 Bocholt (DE); DEGELING, Markus, 46395 Bocholt (DE); BRÖCKER, Sarah, 46395 Bocholt (DE); WILDE, David, 46395 Bocholt (DE)
(74) Vertreter: Michalski Hüttermann & Partner Patentanwälte mbB

(57) **Zusammenfassung**

Die Erfindung betrifft eine Lageranordnung 10, mit zwei Wälzlagern 20, 30, ein zwischen den Innenringen 22, 32 der Wälzlager 20, 30 einsitzendes erstes Distanzelement 40 und ein zur Einstellung einer Lagervorspannung zwischen den Außenringen 24, 34 der Wälzlager 20, 30 einsitzendes zweites Distanzelement 42, wobei das zweite Distanzelement 42 umfänglich mehrteilig zusammengesetzt ist. Bei einem Montageverfahren wird bei einer endgültigen Montage gegenüber der vorläufigen Montage das zweite Distanzelement 42 mit einem korrigierten axialen Breitenmaß eingesetzt. Das endgültige axiale Breitenmaß des zweiten Distanzelements 42 ergibt sich aus lediglich wenigen toleranzbehafteten Maßen, da der Toleranzbereich diverser Bauteilmaßen durch die vorläufige Montage ausgeschaltet wurde.

## Beschreibung

Die Erfindung betrifft eine Lageranordnung, mit einem ersten Wälzlager mit einem Innenring und einem Außenring, einem zweiten Wälzlager mit einem Innenring und einem Außenring, einem zwischen den Innenringen der Wälzlager einsitzenden ersten Distanzelement und einem zur Einstellung einer Lagervorspannung zwischen den Außenringen der Wälzlager einsitzenden zweiten Distanzelement.

Eine Lageranordnung ist in der EP 3 650 689 A1 gezeigt. Lageranordnungen werden im Getriebebau eingesetzt und werden insbesondere im Bereich von Antriebssträngen von Windkraftanlagen steigenden Anforderung ausgesetzt. Dies betrifft sowohl die Belastungen während des Betriebs als auch das Erfordernis bzgl. der Montage und der Einstellung, nämlich diese schnell und präzise zu bewerkstelligen. Es existieren indirekte Einstellungsverfahren für Lageranordnungen, die allerdings mit hohen Unsicherheiten einhergehen. Darüber hinaus sind axiale Vorspannungen von Lageranordnungen nicht in Form von geometrischen Maßen unmittelbar messbar. Es ist üblich eine zu erzielende Vorspannung vorzugeben und davon ausgehend die axiale Breite der Distanzelemente zwischen den Lagerringen zu berechnen, die Distanzringe wie berechnet zu fertigen und anschließend die Lager einschließlich der Distanzelemente zu montieren. Hierbei kann nicht immer gewährleistet werden, dass die vorgegebene Vorspannung erzielt wird.

Die Einstellung der Lagervorspannung erfolgt über das Anpassen der axialen Breite des inneren Distanzelements im Verhältnis zur axialen Breite des äußeren Distanzelements. Für die Berechnung der einzustellenden axialen Breitenmaße der Distanzringe wird eine Vielzahl an Messwerten benötigt. Infolge der fertigungstechnisch prinzipbedingt vorhandenen Toleranzen der Messwerte kann ein seriensicherer Montageprozess von Lageranordnungen in dem beschriebenen Bereich nicht gewährleistet werden, da die geforderte Genauigkeit der Einstellung nicht erreicht wird.

Es besteht deshalb ein ständiges Bedürfnis an einer leistungsfähigen Lageranordnung, die präzise einstellbar, schnell montierbar und kosteneffizient in der Herstellung ist. Der Erfindung liegt die Aufgabe zugrunde, eine technische Möglichkeit bereitzustellen, die in zumindest einem der genannten Aspekte eine Verbesserung bietet.

Die Lösung der Aufgabe erfolgt durch eine Lageranordnung mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft eine Lageranordnung, umfassend ein erstes Wälzlager mit einem Innenring und einem Außenring, ein zweites Wälzlager mit einem Innenring und einem Außenring, ein zwischen den Innenringen der Wälzlager einsitzendes erstes Distanzelement und ein zur Einstellung einer Lagervorspannung zwischen den Außenringen der Wälzlager einsitzendes zweites Distanzelement, wobei das zweite Distanzelement aus zumindest zwei umfänglich gegeneinandergesetzten Bogenstücken besteht.

Die Distanzringe können ringförmig ausgebildet sein. Insbesondere der erste bzw. der innere Distanzring kann als Hülse ausgeführt sein, wobei er mit einer Passung auf der Welle sitzen kann. Die beiden Innenringe der Lager werden im Verbund mit dem ersten Distanzelement durch ein Sicherungselement axial gegen die Welle verspannt. Die Lagerinnenringe sitzen bevorzugt mit einer Passung auf der Welle. Sowohl die Passung, als auch die axiale Verspannung über das Sicherungselement sollen in einem regulären Betrieb eine Relativdrehung der Lagerringe gegenüber der Welle verhindern.

Das zweite Distanzelement ist mehrteilig aufgebaut. Die Einzelteile können zu dem einsatzbereiten Distanzelement zusammengesetzt werden. Die Einzelteile können untereinander identisch oder verschieden zueinander ausgeführt sein. Zumindest unterscheiden sich die mehreren Einzelteile durch ihre umfängliche Position innerhalb der Lageranordnung in deren endmontierten Zustand. Die Einzelteile sind als Bogenstücke ausgeführt, wobei mit dem Begriff Bogen der mathematische Begriff Kreisbogen gemeint ist, so dass ein jedes Bogenstück auf einem Bogenmaß eines Umfangs der Lageranordnung liegt. Bevorzugt lassen sich die mehreren Einzelteile eines zweiten Distanzelements zu einem umfänglich geschlossenen Ring zusammensetzen. Bevorzugt ist, wenn das zweite Distanzelement aus zwei Bogenstücken zusammengesetzt ist. Ein jedes der Bogenstücke umschließt dann zweckmäßigerweise 180° des Umfangs. Alternativ kann der Distanzring auch aus drei oder mehr Bogenstücken zusammengesetzt sein. Auch hier bietet sich zunächst eine über den Umfang gleichmäßige Aufteilung an. Es kann allerdings auch vorteilhaft und in gewissen Anordnungen zweckmäßig sein, wenn eine ungleichmäßige umfängliche Aufteilung der Bogenstücken eines Distanzelements vorgesehen ist.

Das zweite Distanzelement weist ein axiales Breitenmaß auf, so dass sich zumindest mittelbar über das zweite Distanzelement eine Lagervorspannung eingestellt wird. Das axiale Breitenmaß des zweiten Distanzelements kann dazu herangezogen werden, eine zu erzielende Lagervorspannung endgültig einstellen und zwar nachdem die Lageranordnung zumindest einmal vorläufig montiert worden ist. Infolge der vorläufigen Montage sind aus den toleranzbehafteten Maßen endgültige Montagemaße geworden, die in einem einfach zu erfassenden Messwert münden. Bei diesem Messwert kann es sich beispielsweise um ein Axialspiel der vorläufig montierten Lageranordnung handeln, wobei dieser erfasste Messwert Eingang in eine Ermittlung oder Berechnung eines endgültigen axialen Breitenmaßes des zweiten Distanzelements finden kann.

Die beiden Distanzelemente können in einer radialen Richtung den axialen Zwischenraum zwischen den beiden Lagern zumindest zu einem Großteil ausfüllen. Hierbei kann in konkreter Ausgestaltung vorgesehen sein, dass sich das zweite Distanzelement ausgehend von einem Umfangsbereich der Außenringe nach radial innen erstreckt. Während sich das innere, erste Distanzelement lediglich innerhalb der radialen Höhe der Lagerinnenringe erstreckt, reicht das äußere, zweite Distanzelement sowohl nach innen über die Lageraußenringe hinaus, als auch in den Umfangsbereich der Wälzkörper.

In einer bevorzugten Ausgestaltung der Lageranordnung ist vorgesehen, dass in dem zweiten Distanzelement zumindest ein in radialer Richtung verlaufender Ölversorgungskanal mit beidseitig axial gerichteten Ölaustrittsbohrungen angeordnet ist. Hierdurch ist es möglich, den Wälzkörpern in den Bereichen, in dem die größten Axialkräfte herrschen, gezielt Schmieröl zuzuführen. Bevorzugt kann das zweite Distanzelement mehrere axial verlaufende und über den Umfang ausgebildete Durchbrüche ausbilden.

In einer bevorzugten Ausgestaltung der Lageranordnung ist vorgesehen, dass sich das zweite Distanzelement unter Bildung eines Spaltes zu dem ersten Distanzelement nach radial innen erstreckt. Hierbei kann der Spalt so schmal gehalten sein, dass das durch die Öldurchgangsbohrung von dem zweiten zu dem ersten Distanzelement geleitete Schmieröl an dem Spalt nur einen geringen Druckverlust erfährt. Sollte es erforderlich sein, den Druckverlust weitestgehend zu vermeiden, dann kann in dem Spalt zusätzlich eine Spaltdichtung integriert sein.

In einer bevorzugten Ausgestaltung der Lageranordnung ist vorgesehen, dass das zweite Distanzelement außenumfänglich eine erste Nut ausbildet, zur Aufnahme eines mit einem umgebenden Gehäuse formschlüssig verbundenen Sicherungselements. Hierdurch ist es möglich, ein Mitdrehen der Lageraußenringe mit der Welle bzw. eine Relativdrehung zwischen den Lageraußenringen und dem umgebenden Gehäuse zumindest zu erschweren. Zur Vermeidung einer derartigen Relativdrehung ist besonders bevorzugt vorgesehen, dass das zweite Distanzelement außenumfänglich eine zweite Passfedernut ausbildet, zur Aufnahme einer mit zumindest einem der Außenringe formschlüssig verbundenen Passfeder.

In einer bevorzugten Ausgestaltung der Lageranordnung ist vorgesehen, dass die zumindest zwei umfänglichen Bogenstücken gegeneinander verschraubt und/oder über Passstifte verbunden sind. Über eine Verschraubung oder eine Verstifftung der Bogenstücke miteinander lässt sich die Maßgenauigkeit steigern.

Zudem können das erste und/oder zweite Wälzlager als Axial-Kegelrollenlager, als Kegelrollenlager, als Schrägkugellager, oder als Axial-Pendelrollenlager ausgebildet sein. Derartige Wälzlager erlauben es in vorteilhafter Weise, eine Axialbeanspruchung auf den Außenring oder Innenring als Druckbeanspruchung in die schräggestellten Wälzkörper einzuleiten und in den Innenring bzw. Außenring weiterzuleiten. Dadurch ist die auf die Lageranordnung ausgeübte Axialkraft dauerhaft und zuverlässig vom Innenring auf den Außenring oder umgekehrt weiterleitbar. Insbesondere sind das erste und das zweite Wälzlager in einer O-Anordnung zueinander angeordnet.

Die Aufgabe wird ferner gelöst durch ein Verfahren zur Montage einer wie beschriebenen Lageranordnung zwischen einem Gehäuse und einer Welle, bei dem eine vorläufige Montage der mit der Lageranordnung bestückten Welle innerhalb des Gehäuses erfolgt, ein Maß eines Axialspiels zwischen Welle und Gehäuse bestimmt wird und nach Demontage der Welle aus dem Gehäuse eine endgültige Montage der mit der Lageranordnung bestückten Welle innerhalb des Gehäuses erfolgt, wobei das zweite Distanzelement der Lageranordnung gegenüber der vorläufigen Montage ein um das bestimmte Maß des Axialspiels erhöhtes axiales Breitenmaß aufweist.

Das Montageverfahren teilt sich in einen ersten Schritt der vorläufigen Montage einschließlich Axialspielmessung und einen zweiten Schritt der endgültigen Montage mit Einstellung der zu erzielenden Vorspannung auf. Dem Verfahren liegt der Gedanke zugrunde, dass durch die vorläufige Montage der Lageranordnung die Toleranzbereiche von einigen Bauteilmaßen auf ihre faktischen Werte eingegrenzt werden. Dies bedeutet, dass diese Bauteilmaße nicht mehr mit ihrem jeweiligen Toleranzbereich in die Bestimmung des endgültigen axialen Breitenmaßes des zweiten Distanzelements eingehen. Vielmehr gehen diese Bauteilmaße mit ihren faktischen Werten in das Maß des Axialspiels ein, welches dann einen messbaren Werten darstellt, wobei der dann gemessene Werte des Axialspiels mit einem einzigen Messtoleranzbereich vorliegt. Für die Ermittlung des endgültigen axialen Breitenmaßes des zweiten Distanzelements wird nun das ermittelte Maß des Axialspiels herangezogen. In einer bevorzugten Ausgestaltung des Verfahrens wird das Maß des Axialspiels zumindest um ein Toleranzmaß eines Gehäuseinnendurchmesser und/oder um ein Toleranzmaß eines Lageraußenringdurchmessers korrigiert. Dies bedeutet insbesondere, dass sich das endgültige axiale Breitenmaß des zweiten Distanzelements aus lediglich wenigen toleranzbehafteten Maßen ergibt, da, wie zuvor beschrieben, der Toleranzeinfluss diverser Bauteilmaße ausgeschaltet wurde.

Die Aufgabe wird ferner gelöst durch einen Antriebsstrang für eine Windkraftanlage, umfassend eine Wellenbaugruppe zur drehmomentübertragenden Verbindung eines Mehrblattrotors mit einem Generator, wobei die Hohlwellenbaugruppe ein Gehäuse und eine in dem Gehäuse drehbar gelagerte Hohlwelle aufweist und die Hohlwelle über eine Lageranordnung wie beschrieben in dem Gehäuse gelagert ist.

Der Antriebsstrang kann für eine Windkraftanlage vorgesehen sein, die als sogenannter Mittelschnellläufer ausgelegt ist. Die Hohlwellenbaugruppe umfasst strukturell ein Gehäuse, eine axial kurzbauende Hohlwelle und die beschriebene Lageranordnung, die die Hohlwelle innerhalb des Gehäuses drehend lagert. Die Hohlwellenbaugruppe kann ein antriebsseitig vorgesehenes Getriebe mit einem abtriebsseitig vorgesehenen Generator drehmomentübertragend verbinden. Das Getriebe kann zumindest eine Planetenstufe umfassen, wobei zweckmäßigerweise ein abtreibendes Sonnenrad mit der Hohlwelle antriebsverbunden ist. Der Generator kann gehäuseseitig mit dem Gehäuse der Hohlwellenbaugruppe verbunden sein. Die Generatorläufer kann mit der Hohlwelle der Hohlwellenbaugruppe antriebsverbunden sein. Bei einer derartigen Konfiguration mit der beschriebenen Lageranordnung kann vorteilhafterweise auf eine eigene Lagerung des Generatorläufers innerhalb des Generatorgehäuses verzichtet werden. Die Lagerung des Generatorläufers kann über die Hohlwellenbaugruppen erfolgen, insbesondere über die beschriebene Lageranordnung zwischen der Welle und dem Gehäuse der Hohlwellenbaugruppe. Insbesondere bei der Gestaltung des Antriebsstrangs für Mittelschnellläufer kann die Hohlwellenbaugruppe als ein Ersatz für eine Kupplung vorgesehen sein, die gemeinhin zwischen Getriebe und Generator angeordnet ist.

Die Aufgabe wird ferner gelöst durch eine Windkraftanlage, umfassend eine Gondel, an der drehbar ein Mehrblattrotor und ein Generator angebracht sind, wobei der Mehrblattrotor drehmomentübertragend über einen Antriebsstrang mit dem Generator verbunden ist und der Antriebsstrang wie zuvor beschrieben ausgebildet ist. Der Antriebsstrang ist in der Gondel aufgenommen und ist gemäß einer bereits beschriebenen Ausführungsformen des Antriebsstrang oder der hierin zum Einsatz kommenden Lageranordnung ausgebildet.

Die Aufgabe wird ferner gelöst durch ein Computerprogrammprodukt zum Simulieren eines Betriebsverhaltens einer in einer Windkraftanlage eingesetzten Lageranordnung, wobei die Lageranordnung gemäß einer zuvor beschriebenen Ausführungsform ausgebildet ist. Dazu kann das Computerprogrammprodukt Daten zur Kinematik der Wälzlager und/oder der Hohlwelle umfassen. Ferner kann das Computerprogrammprodukt Simulationsroutinen umfassen, die dazu ausgebildet sind, basierend auf Angaben zum vorliegenden Betriebszustand, beispielsweise einer Drehzahl, eines Drehmoments, einer Schmierstofftemperatur, einer Umgebungstemperatur, einer Axialbeanspruchung, einer Radialbeanspruchung und Verbindung mit Abmessungen der Wälzlager, des Distanzelements, deren Verhalten zu simulieren. Dies kann ein Biegeverhalten, ein Ermüdungsverhalten, eine Veränderung einer axialen Vorspannkraft, ein thermisches Verhalten und/oder ein Vibrationsverhalten umfassen. Das Computerprogrammprodukt kann auch eine Datenschnittstelle aufweisen, über die die Angaben zum vorliegenden Betriebszustand vorgebbar sind. Ebenso kann das Computerprogrammprodukt auch eine Datenschnittstelle zum Ausgeben von Simulationsergebnissen aufweisen. Darüber sind Resultate des Computerprogrammprodukts an andere simulationsgerichtete Computerprogrammprodukte ausgebbar. Erfindungsgemäß ist die Lageranordnung, deren Betriebsverhalten mittels des Computerprogrammprodukts simulierbar ist, gemäß mindestens einer der oben skizzierten Ausführungsformen ausgebildet.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: einen Längsschnitt durch eine Lageranordnung,
Fig. 2, 3: Detaillierungen eines Distanzelements einer Lageranordnung nach Figur 1 in perspektivischer Ansicht;
Fig. 4: einen weiteren Längsschnitt durch die Lageranordnung nach Figur 1 und
Fig. 5: eine perspektivische Darstellung einer Windkraftanlage.

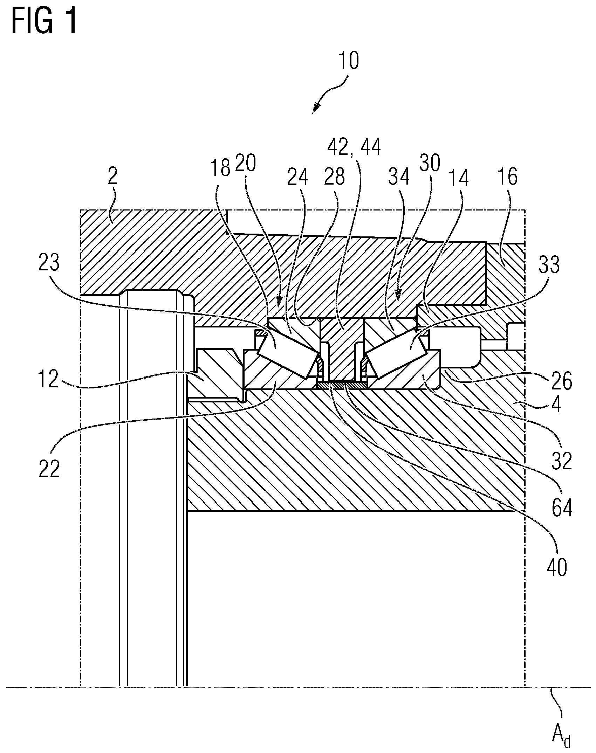

In Figur 1 ist schematisch eine Ausführungsform einer beanspruchten Lageranordnung 10 in einem montierten Zustand dargestellt. Die Lageranordnung 10 weist ein erstes Wälzlager 20 und ein zweites Wälzlager 30 auf. Die Lageranordnung 10 ist in einem Gehäuse 2 angeordnet. Über die Lageranordnung 10 ist eine Welle 4 um eine Drehachse A_{d} drehbar in dem Gehäuse 2 gehalten. Die Welle 4 ist vorliegend als Hohlwelle ausgebildet. Der Zusammenbau aus Gehäuse 2, Welle 4, Lageranordnung 10 und weiterer Bauteile kann als Hohlwellenbaugruppe bezeichnet werden. Wie noch im weiteren Verlauf beschrieben wird, kann die Hohlwellenbaugruppe ein Getriebe mit einem Generator antriebsmäßig verbinden.

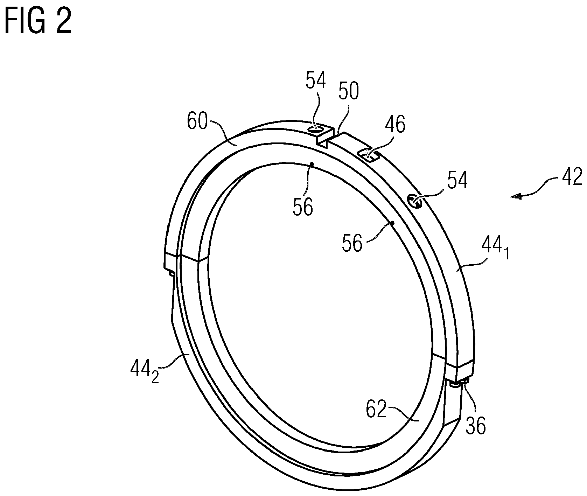

Das erste Wälzlager 20 umfasst einen Innenring 22, einen Außenring 24 und dazwischen angeordnete Wälzkörper 23. Korrespondierend hierzu umfasst auch das zweite Wälzlager 30 einen Innenring 32, einen Außenring 34 und dazwischen angeordnete Wälzkörper 33. Das erste und zweite Wälzlager 20, 30 sind in O-Anordnung zueinander angeordnet. Beim ersten und zweiten Wälzlager 20, 30 dient der jeweilige Außenring 24, 34 als stationäres Bauteil, da sie im montierten Zustand drehfest im Gehäuse 2 gehalten sind. Korrespondierend dazu stellen die Innenringe 22, 32 des ersten und zweiten Wälzlagers 20, 30 jeweils rotierende Bauteile dar. Zwischen den Innenringen 22, 32 der beiden Wälzlager 20, 30 sitzt ein erstes Distanzelement 40 ein und zwischen den Außenringen 24, 34 der beiden Wälzlager 20, 30 sitzt ein zweites Distanzelement 42 ein. Über das erste Distanzelement 40 werden die beiden Innenringe 22, 32 axial beabstandet gehalten und über das zweite Distanzelement 42 werden die beiden Außenringe 24, 34 axial beabstandet gehalten. Beide Distanzelemente 40, 42 sind ringförmig ausgeführt, wobei insbesondere das innere und erste Distanzelement 40 die Welle 4 hülsenförmig umgibt. Das zweite Distanzelement 42 kann beispielsweise aus zwei Bogenstücken 44 zusammengesetzt sein, wie anhand der Figur 2 erläutert wird.

Die beiden Innenringe 22, 32 der Wälzlager 20, 30 sitzen mit einer Übergangspassung auf der Welle 4. Hierdurch sind die Innenringe 22, 32 zunächst gegen eine Relativdrehung gegenüber der Welle 4 gehalten. Zur weiteren Sicherung gegen eine Relativdrehung zwischen Innenringe 22, 32 und Welle 4 ist endseitig auf die Welle 4 eine Nutmutter 12 geschraubt, die beide Innenringe 22, 32 und das einsitzende erste Distanzelement 40 mit einer Axialkraft gegen eine Wellenschulter 26 beaufschlagt. In einem montierten Zustand der Lageranordnung auf der Welle 4 und in dem Gehäuse 2 sitzen die beiden Außenringe 24, 34 der Wälzlager 20, 30 ebenfalls mit einem Übermaß in einer Aufnahmebohrung 28 des Gehäuses 2. Über einen Einstellring 14 und einen Gehäusedeckel 16 wird eine Axialkraft aufgebracht, die die beiden Außenringe 24, 34 und das einsitzende zweite Distanzelement 42 gegen eine Gehäuseschulter 18 beaufschlagt. Hierdurch ist zunächst eine Sicherung gegen eine Relativdrehung zwischen Außenringen 24, 34 und dem Gehäuse 2 gegeben. Eine weitere Möglichkeit der Sicherung gegen eine Relativdrehung wird im Zusammenhang mit dem zweiten Distanzelement 42 im weiteren Verlauf beschrieben.

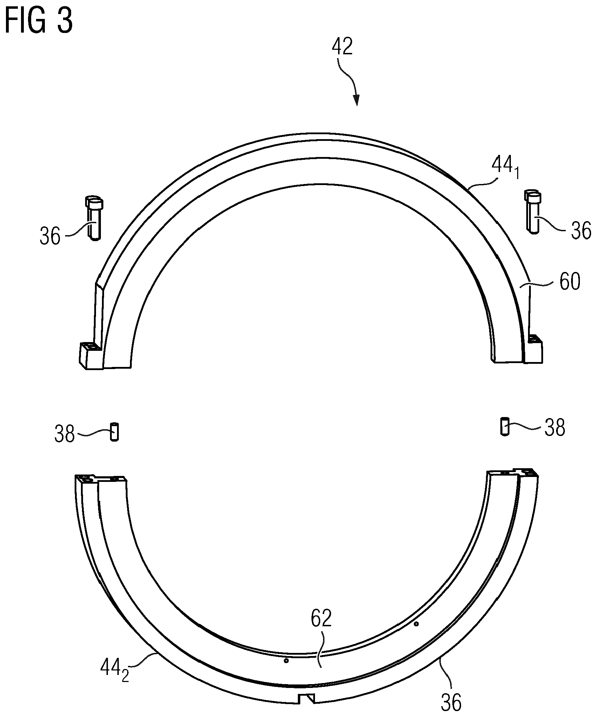

In den Figuren 2 und 3 ist das zweite Distanzelement 42 als Detaillierung in unterschiedlichen perspektivischen Darstellungen gezeigt, auf die im Folgenden im Wesentlich gemeinsam Bezug genommen wird. Das zweite Distanzelement 42 ist vorliegend in einer zweiteiligen Ausführung gezeigt. Das Distanzelement 42 besteht dann aus zwei umfänglich gegeneinandergesetzten Bogenstücken 44₁, 44₂. Die beiden gegeneinandergesetzten Bogenstücke 44₁, 44₂ bilden einen umfänglich geschlossenen Ring.

Die zwei umfänglichen Bogenstücken 44₁, 44₂ sind über Schrauben 36 gegeneinander verschraubt und zusätzlich über Passstifte 38 gegeneinander positioniert.

Das zweite Distanzelement 42 kann in einem Längsschnitt betrachtet im Wesentlichen T-förmig ausgebildet sein, wie insbesondere in der Figur 1 zu erkennen ist. Die T-Form wird durch einen radial äußeren Distanzkörper 60 und einem von diesem nach radial innen sich fortsetzenden Steg 62 gebildet. Der Distanzkörper 60 findet seine Funktion darin, axial zwischen den Außenringen 24, 34 der Lager 20, 30 einzusitzen und die Außenringe 24, 34 in einem definierten axialen Abstand zu halten. Durch den Steg 62 setzt sich das zweite Distanzelement 42 nach radial innen zwischen den Wälzkörpern 23, 33 der Lager 20, 30 fort. Bevorzugt setzt sich das zweite Distanzelement 42 so weit nach radial innen bis zu dem ersten Distanzelement 40 fort, so dass beide Distanzelemente 40, 42 zueinander einen schmalen radialen Spalt 64 bilden. Das radiale Maß des Spalts 64 kann vorliegend je nach Anwendung variieren.

Das radiale Maß des Spalts 64 kann beispielsweise größer gewählt werden, wenn ausgehend von dem radial inneren Bereich des Distanzelements 42 eine Schmierung der Wälzkörper 23, 33 der Lager 20, 30 vorgesehen sein soll. Bei einer derartigen Ausführung ist in dem zweiten Distanzelement 42 zumindest ein in radialer Richtung verlaufender Ölversorgungskanal 54 mit beidseitig axial gerichteten Ölaustrittsbohrungen 56 angeordnet. Die Figur 2 lässt erkennen, dass zwei Ölversorgungskanäle 54 über den Umfang angeordnet sind. Über die axial gerichteten Ölaustrittsbohrungen 56 kann Schmieröl zu den Wälzkörpern 23, 33 geleitet werden. Alternativ kann auch nur ein Ölversorgungskanal 54 vorgesehen sein.

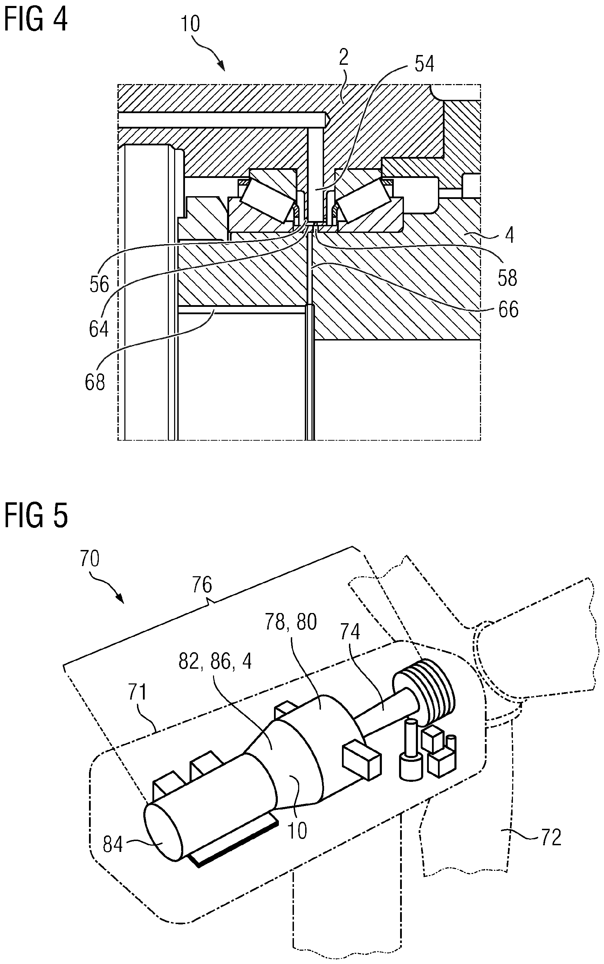

Das radiale Maß des Spalts 64 kann beispielsweise kleiner gewählt werden, wenn zusätzlich vorgesehen sein soll, dass der oder die Ölversorgungskanäle 54 eine sich nach radial innen fortsetzende Öldurchgangsbohrung 58 aufweisen, worauf noch im Zusammenhang mit der Figur 4 eingegangen wird.

Das zweite Distanzelement 42 bildet außenumfänglich eine erste Nut 46 aus. Über eine hierin aufgenommene Passfeder (nicht dargestellt) kann das zweite Distanzelement 42 formschlüssig gegen Drehungen gegenüber dem Gehäuse 2 gesichert sein. Zudem bildet das zweite Distanzelement 42 außenumfänglich eine zweite Passfedernut 50 aus. Über eine hierin aufgenommen Passfeder (nicht dargestellt) kann das zweite Distanzelement 42 formschlüssig gegen Drehungen gegenüber zumindest einem der Außenringe 24, 34 gesichert sein.

Anhand der Figur 4 wird die mögliche Ölversorgung durch das zweite Distanzelement 42 anhand eines Zusammenbaus gezeigt. Das Zusammenwirken des ersten Distanzelements 40 mit dem zweiten Distanzelement 42 zeichnet sich durch einen Spalt 64 mit einem geringen radialen Maß aus. Zunächst zweigen von dem Ölversorgungskanal 54 beidseitig axial gerichteten Ölaustrittsbohrungen 56 auf, um die Wälzkörper 23, 33 zu beölen. Zusätzlich ist vorgesehen, dass der Ölversorgungskanal 54 eine sich nach radial innen und durch das erste Distanzelement 40 fortsetzende Öldurchgangsbohrung 58 aufweist. Korrespondierend zu der Öldurchgangsbohrung 58 ist in der Welle 4 ein radialer Ölkanal 66 ausgebildet, über den Schmieröl beispielsweise zu einer Längsverzahnung 68 an einem Innenumfang der Welle 4 gelangen kann.

Die vorliegende Lageranordnung 10 wird mit einer axialen Vorspannung zwischen dem Gehäuse 2 und der Welle 4 montiert. Das hierbei zur Anwendung kommende Montageverfahren teilt sich in einen ersten Schritt der vorläufigen Montage einschließlich Axialspielmessung und einen zweiten Schritt der endgültigen Montage mit Einstellung der zu erzielenden Vorspannung auf. Zunächst werden beiden Wälzlager 20, 30 im Verbund mit den ersten und zweiten axial einsitzenden Distanzelementen 40, 42 auf der Welle 4 aufgesetzt. Die Innenringe 22, 32 der Wälzlager 20, 30 haben bevorzugt eine Übergangspassung bezüglich des Durchmessers der Welle 4. Anschließend wird die Welle 4 mit den aufgesetzten Wälzlägern 20, 30 in die Aufnahmebohrung 28 des Gehäuses 2 eingeschoben. Hiermit ist die vorläufige Montage erfolgt. Für diese vorläufige Montage ist ein zweites Distanzelement vorgesehen, dessen axiales Breitenmaß derart bemessen ist, dass die vorläufig montierte Lageranordnung 10 ein axiales Spiel der Welle 4 gegenüber dem Gehäuse 2 zulässt. Dieses axiale Spiel wird bestimmt bzw. mit entsprechenden Messmitteln gemessen. Im Anschluss wird die Welle 4 zusammen mit den auf ihr gehaltenen Wälzlagern 20, 30 und Distanzelementen 40, 42 aus der Aufnahmebohrung 28 des Gehäuses 2 herausgezogen und das zumindest zweiteilige zweite Distanzelement 42 zwischen den beiden Wälzlagern 20, 30 entfernt. Infolge der Mehrteiligkeit des zweiten Distanzelements 42 können beiden Wälzlager 20, 30 in ihrer Position unverändert auf der Welle 2 verbleiben, da die Bogenstücke 44 des Distanzelements 42 zwischen den Wälzlagern 20, 30 entnommen werden können. Im Anschluss hieran erfolgt die endgültige Montage der Lageranordnung 10, wobei ein zweites Distanzelement 42 mit einem gegenüber der vorläufigen Montage erhöhten axialen Breitenmaß eingesetzt wird. Dieses erhöhte axiale Breitenmaß setzt sich aus dem axialen Breitenmaß des Distanzelements 42 der vorläufigen Montage und dem bestimmten Maß des Axialspiels zusammen.

In der Figur 5 ist eine Ausführungsform einer Windkraftanlage 70 dargestellt. Die Windkraftanlage 70 umfasst eine Gondel 71, an der drehbar ein Mehrblattrotor 72 angebracht ist. Der Mehrblattrotor 72 ist mit einer Hauptwelle 74 drehmomentübertragend verbunden, wobei die Hauptwelle 74 zu einem Antriebsstrang 76 gehört. Der Antriebsstrang 76 umfasst ferner ein Getriebe 78, das drehmomentübertragend mit der Hauptwelle 74 verbunden ist. Das Getriebe 78 weist zumindest eine Planetenstufe 80 auf und ist wiederum über eine Hohlwellenbaugruppe 82 mit einem Generator 84 gekoppelt. Die Hohlwellenbaugruppe 82 ist in einen sich verjüngenden Gehäuseabschnitt 86 des Getriebes 78 aufgenommen. Der Gehäuseabschnitt 86 kann als eigenständiges Gehäuse 2 gestaltet sein. In der Hohlwellenbaugruppe 82 ist eine Lageranordnung 10 vorgesehen ist. Die Lageranordnung 10 ist gemäß einer der oben beschriebenen Ausführungsformen ausgebildet. Die Lageranordnung 10 ist in einem Computerprogrammprodukt abgebildet, das dazu geeignet ist, deren Betriebsverhalten während eines Betriebs der Windkraftanlage 70 zu simulieren.

### Bezugszeichenliste

- 2: Gehäuse
- 4: Welle
- 10: Lageranordnung
- 12: Nutmutter
- 14: Einstellring
- 16: Gehäusedeckel
- 18: Gehäuseschulter
- 20: Wälzlager
- 22: Innenring
- 23: Wälzkörper
- 24: Außenring
- 26: Wellenschulter
- 28: Aufnahmebohrung
- 30: Wälzlager
- 32: Innenring
- 33: Wälzkörper
- 34: Außenring
- 36: Schraube
- 38: Passstift
- 40: Distanzelement
- 42: Distanzelement
- 44: Bogenstücke
- 46: Nut
- 50: Passfedernut
- 54: Ölversorgungskanal
- 56: Ölaustrittsbohrung
- 58: Öldurchgangsbohrung
- 60: Distanzkörper
- 62: Steg
- 64: Radialspalt
- 66: Ölkanal
- 68: Längsverzahnung
- 70: Windkraftanlage
- 71: Gondel
- 72: Mehrblattrotor
- 74: Hauptwelle
- 76: Antriebsstrang
- 78: Getriebe
- 80: Planetenstufe
- 82: Hohlwellenbaugruppe
- 84: Generator
- 86: Gehäuseabschnitt

## Patentansprüche

1. Lageranordnung (10), umfassend
ein erstes Wälzlager (20) mit einem Innenring (22) und einem Außenring (24),
ein zweites Wälzlager (30) mit einem Innenring (32) und einem Außenring (34),
ein zwischen den Innenringen (22, 32) der Wälzlager (20, 30) einsitzendes erstes Distanzelement (40) und
ein zur Einstellung einer Lagervorspannung zwischen den Außenringen (24, 34) der Wälzlager (20, 30) einsitzendes zweites Distanzelement (42),
**dadurch gekennzeichnet, dass**
das zweite Distanzelement (42) aus zumindest zwei umfänglich gegeneinandergesetzten Bogenstücken (44₁, 44₂) besteht.

2. Lageranordnung (10) nach Anspruch 1, **dadurch gekennzeichnet, dass** sich das zweite Distanzelement (42) ausgehend von einem Umfangsbereich der Außenringe (24, 34) nach radial innen erstreckt.

3. Lageranordnung (10) nach Anspruch 2, **dadurch gekennzeichnet, dass** sich das erste oder das zweite Distanzelement (40, 42) unter Bildung eines Spaltes zu dem jeweils anderen Distanzelement (42, 40) in radialer Richtung erstreckt.

4. Lageranordnung (10) nach einem der Ansprüche 1 bis 3, **dadurch gekennzeichnet, dass** das zweite Distanzelement (42) außenumfänglich eine erste Nut (46) ausbildet, zur Aufnahme eines mit einem umgebenden Gehäuse verbundenen Sicherungselements.

5. Lageranordnung (10) nach einem der Ansprüche 1 bis 4, **dadurch gekennzeichnet, dass** das zweite Distanzelement (42) außenumfänglich eine zweite Passfedernut (50) ausbildet, zur Aufnahme einer mit zumindest einem der Außenringe (24, 34) formschlüssig verbundenen Passfeder.

6. Lageranordnung (10) nach einem der Ansprüche 1 bis 5, **dadurch gekennzeichnet, dass** in dem zweiten Distanzelement (42) zumindest ein in radialer Richtung verlaufender Ölversorgungskanal (54) mit zumindest einer Ölaustrittsbohrungen (56) angeordnet ist.

7. Lageranordnung (10) nach Anspruch 6, **dadurch gekennzeichnet, dass** der Ölversorgungskanal (54) zwei beidseitig axial gerichtete Ölaustrittsbohrungen (56) aufweist.

8. Lageranordnung (10) nach einem der Ansprüche 1 bis 7, **dadurch gekennzeichnet, dass** die zumindest zwei umfänglichen Bogenstücken (44₁, 44₂) gegeneinander verschraubt und/oder über Passstifte (38) verbunden sind.

9. Lageranordnung (10) nach einem der Ansprüche 1 bis 8, **dadurch gekennzeichnet, dass** das erste und/oder zweite Wälzlager (20, 30) als Axial-Kegelrollenlager, als Kegelrollenlager, als Schrägkugellager, oder als Axial-Pendelrollenlager ausgebildet ist.

10. Lageranordnung (10) nach einem der Ansprüche 1 bis 9, **dadurch gekennzeichnet, dass** das erste und das zweite Wälzlager (20, 30) in einer O-Anordnung zueinander angeordnet sind.

11. Verfahren zur Montage einer Lageranordnung (10) nach einem der vorangegangenen Ansprüche zwischen einem Gehäuse (2) und einer Welle (4), bei dem eine vorläufige Montage der mit der Lageranordnung (10) bestückten Welle (4) innerhalb des Gehäuses (2) oder einer das Gehäuse (2) repräsentierenden Vorrichtung erfolgt,
ein Maß eines Axialspiels zwischen Gehäuse (2) oder der das Gehäuse (2) repräsentierenden Vorrichtung und Welle (4) bestimmt wird und
nach Demontage der Welle (4) aus dem Gehäuse (2) eine endgültige Montage der mit der Lageranordnung (10) bestückten Welle (4) innerhalb des Gehäuses (2) erfolgt, wobei das zweite Distanzelement (42) der Lageranordnung (10) gegenüber der vorläufigen Montage ein zumindest um das bestimmte Maß des Axialspiels erhöhtes axiales Breitenmaß aufweist.

12. Verfahren nach dem vorangegangenen Anspruch, bei dem das Maß des Axialspiels abhängig von zumindest einem Toleranzmaß eines Gehäuseinnendurchmesser und/oder von einem Toleranzmaß eines Lageraußenringdurchmessers korrigiert wird.

13. Antriebsstrang (76) für eine Windkraftanlage, umfassend eine Wellenbaugruppe (82) zur drehmomentübertragenden Verbindung eines Mehrblattrotors (72) mit einem Generator (84),
wobei die Wellenbaugruppe (82) ein Gehäuse (2) und eine in dem Gehäuse (2) drehbar gelagerte Welle (4) aufweist und die Welle (4) über eine Lageranordnung (10) nach einem der Ansprüche 1 bis 10 in dem Gehäuse (2) gelagert ist.

14. Windkraftanlage (70), umfassend eine Gondel (71), an der drehbar ein Mehrblattrotor (72) und ein Generator (84) angebracht sind, wobei der Mehrblattrotor (72) drehmomentübertragend über einen Antriebsstrang (76) mit dem Generator (84) verbunden ist und der Antriebsstrang (76) nach Anspruch 13 ausgebildet ist.

15. Computerprogrammprodukt (80) zum Simulieren eines Betriebsverhaltens einer in einer Windkraftanlage (70) eingesetzten Lageranordnung (10), wobei die Lageranordnung (10) nach einem der Ansprüche 1 bis 10 ausgebildet ist.
